# EUROPEAN PATENT SPECIFICATION

(11) **EP 3 318 165 B1**
(45) Date of publication and mention of the grant of the patent: **23.03.2022**
(21) Application number: 17000873.4
(22) Date of filing: 23.05.2017
(51) Int. Cl.: A47K 7/02, A47L 13/46, A47L 13/16, F16B 47/00

(54) **SUCTION ENABLED SPONGE HOLDER**
ANSAUGFÄHIGER SCHWAMMHALTER
SUPPORT D'ÉPONGE ACTIVÉ PAR ASPIRATION

(30) Priority: 08.11.2016 WO PCT/US2016/060920
(43) Date of publication of application: 09.05.2018
(73) Proprietor: Annie International, Inc., North Wales, Pennsylvania 19454-4106 (US)
(72) Inventor: SHINN, Kevin C., Blue Bell, PA 19422 (US); SUH, John J., Lansdale, PA 19446 (US); BAI, Hua, Exton, PA 19341 (US); BERARDINUCCI, Tony, North Wales, PA 19454 (US); SOL, Aram, Elkins Park, PA 19027 (US)
(74) Representative: Clarke, Geoffrey Howard

(56) References cited:
- JP-U- H0 624 596
- US-A- 5 039 045
- US-A- 5 133 524
- US-A- 6 143 391
- US-A1- 2010 181 458
- US-B1- 6 370 722

## Description

### DESCRIPTION 1. Technical Field

The invention generally relates to a hanger and more particularly is concerned, for example, with an improved holding device for securing a cleaning sponge to a mounting surface, such as a wall or the like. Specifically, the holding device includes a protrusion and a spike disposed along a suction cup whereby the protrusion engages a permanent cavity along the sponge and the spike penetrates the sponge forming a temporary cavity. The protrusion and the spike cooperate to secure the sponge to the holding device and to prevent rotation by the sponge relative to the holder.

### 2. Background Art

Osborne describes a hanger for use with cleansing implements, such as sponges, in United States Patent Nos. D499,635 and 7,140,063.

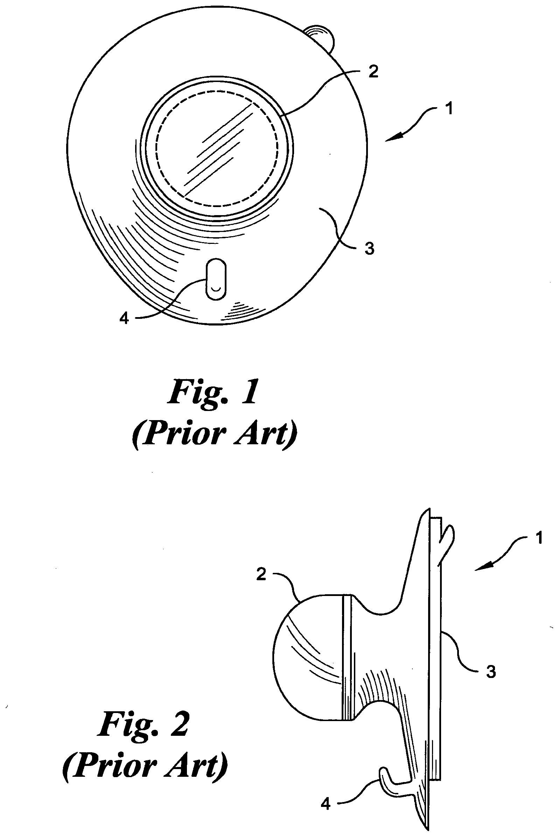

The hanger 1 includes a knob 2 and a retention lip 4 both extending from a suction cup 3, as illustrated in FIGS. 1 and 2. The knob 2 is configured to include a round, blunt-shaped nose. The retention lip 4 is configured as an L-shaped bracket with round, blunt-shaped end. The suction cup 3 is removably attachable to a variety of surfaces over a range of orientations from horizontal to vertical.

The hanger 1 is provided with several attachment means. When the cleansing implement 5 includes a cord 7 attached at one end to a tethered sponge 6, the cord 7 may be placed about and secured to either the retention lip 4 or the knob 2, as illustrated in FIGS. 3 and 4, respectively. Both arrangements allow the tethered sponge 6 to hang below and to freely rotate with respect to the hanger 1. The tethered sponge 6 may extend over the retention lip 4 as shown in FIG. 4. When the cleansing implement 8 is a donut-shaped sponge 9 including a hole 10 and a loop means 24 as illustrated in FIG. 5a, the cleansing implement 8 is placed onto the hanger 1 so that the hole 10 engages the knob 2. This arrangement places the loop means 24 about the knob 2 so that a portion of the donut-shaped sponge 9 extends downward to cover the retention lip 4.

It is understood that Osborne neither teaches nor suggests nor requires the retention lip 4 to penetrate material comprising either the tethered sponge 6 or the donut-shaped sponge 9 for proper function of the hanger 1. The failure to include a feature with this functionality therefore permits the tethered sponge 6 and the donut shaped sponge 9 to freely rotate with respect to the knob 2 and the retention lip 4 and furthermore permits the tethered sponge 6 and the donut-shaped sponge 9 to be more easily removed from the hanger 1 due to inadvertent contact. The end result is a less secure fastening means between hanger 1 and cleansing implements 5, 8.

For at least the reasons discussed above, the benefits and advantages of suction-enabled sponge holders have yet to be completely realized.

Accordingly, what is required is a suction-enabled sponge holder that facilitates removable attachment of the holder to a mounting surface.

Accordingly, what is required is a suction-enabled sponge holder that allows a sponge to be removably securable to the holder.

Accordingly, what is required is a suction-enabled sponge holder that avoids rotation of a sponge relative to the holder when secured thereto. JPH0624596U discloses a suction-enabled sponge holder without a spike.

US6370722 B1 discloses a wall mounted back-scrubbing and massaging apparatus with spikes for holding a sponge, whereas said sponge has no permanent cavity.

### 3. Disclosure of the Invention

An object of the invention is to provide a suction-enabled sponge holder that facilitates removable attachment of the holder to a mounting surface.

An object of the invention is to provide a suction-enabled sponge holder that allows a sponge to be removably securable to the holder.

An object of the invention is to provide a suction-enabled sponge holder that avoids rotation of the sponge relative to the holder when secured thereto.

The invention is defined by a suction-enabled sponge holder according to claim 1 and a method for securing a sponge to a suction-enable sponge holder according to claim 8. Further preferred embodiments are defined in the dependent claims.

In accordance with other embodiments of the invention, the temporary cavity is characterized by localized damage to the sponge cause by the spike. In accordance with yet other embodiments of the invention, the suction enabled sponge holder includes a suction cup, a protrusion, a spike, and a sponge. The protrusion extends from the suction cup. The spike extends from the suction cup adjacent to the protrusion. The sponge includes a permanent cavity. The protrusion slidably engages the sponge via the permanent cavity when the sponge is either secured to or removed from the protrusion. The spike penetrates the sponge to form a temporary cavity therein when the sponge is secured to the protrusion. The temporary cavity closes as the sponge is removed from the protrusion.

In accordance with yet other embodiments of the invention, the protrusion and the spike cooperate to prevent separation of the sponge from the suction-enabled sponge holder.

In accordance with yet other embodiments of the invention, the protrusion and the spike cooperate to prevent rotation of the sponge about the protrusion.

In accordance with yet other embodiments of the invention, the protrusion extends into at least a portion of the permanent cavity.

In accordance with yet other embodiments of the invention, the suction cup is attachable to and removable from a mounting surface.

In accordance with yet other embodiments of the invention, at least a portion of the spike penetrates the sponge.

In accordance with yet other embodiments of the invention, the temporary cavity is characterized by localized damage to the sponge caused by the spike. In accordance with still other embodiments of the invention, the method for securing a sponge to a suction-enabled sponge holder includes the steps of pushing the sponge onto the suction-enabled sponge holder, penetrating a front surface of the sponge via a spike extending from the suction-enabled sponge holder adjacent to the protrusion, and preventing separation between the sponge and the suction-enabled sponge holder. In the pushing step, a permanent cavity beginning at a front surface of the sponge engages a protrusion extending from the suction-enabled sponge holder. In the penetrating step, the penetration forms a temporary cavity along the sponge that conforms to the shape of the spike residing within the sponge. The temporary cavity is characterized by localized damage to the sponge caused by the spike. In the preventing step, separation is avoided via interaction between the protrusion and the sponge along the permanent cavity and interaction between the spike and the sponge along the temporary cavity.

In accordance with still other embodiments of the invention, an applying step applies a localized compressive force via the sponge onto the spike disposed along the temporary cavity.

In accordance with still other embodiments of the invention, a pulling step pulls the sponge away from the suction-enabled sponge holder so that the permanent cavity separates from the protrusion and the temporary cavity separates from the spike.

In accordance with still other embodiments of the invention, a closing step closes at least a portion of the temporary cavity via the localized compressive force as the sponge is pulled away from the suction-enabled sponge holder.

In accordance with still other embodiments of the invention, a closing step closes at least a portion of the temporary cavity via the localized compressive force after the sponge is pulled away from the suction-enabled sponge holder.

In accordance with still other embodiments of the invention, an avoiding step prevents relative rotation between the sponge and the suction-enabled sponge holder via the interactions between the protrusion and the sponge along the permanent cavity and between the spike and the sponge along the temporary cavity.

In accordance with still other embodiments of the invention, the interactions cooperate to secure the sponge to the sponge holder.

In accordance with still other embodiments of the invention, the interactions are due at least in part to shrinkage of the sponge whereby the sponge is laterally pulled into tighter contact with each of the protrusion and the spike.

Several exemplary advantages are mentionable. The invention permits removable attachment of a sponge to a surface in a fixed orientation facilitating retrieval and use of the sponge. The invention permits removable attachment of a sponge to a surface at a fixed orientation facilitating drainage of fluid from the sponge and drying of the sponge after use. The invention avoids rotation of a sponge when mounted onto the holder while minimizing damage to the sponge associated with multiple attachment and removal cycles.

The above and other objectives, features, and advantages of the preferred embodiments of the invention will become apparent from the following description read in connection with the accompanying drawings, in which like reference numerals designate the same or similar elements.

### 4. Brief Description of the Drawings

Additional aspects, features, and advantages of the invention will be understood and will become more readily apparent when the invention is considered in the light of the following description made in conjunction with the accompanying drawings:
FIG. 1 is a front elevation view of a cleansing implement hanger including a knob and a retention lip disposed along a suction cup as described by Osborne in United States Patent No. D499,635;
FIG. 2 is a side elevation view of the cleansing implement hanger in FIG. 1 further illustrating the knob, the retention lip, and the suction cup;

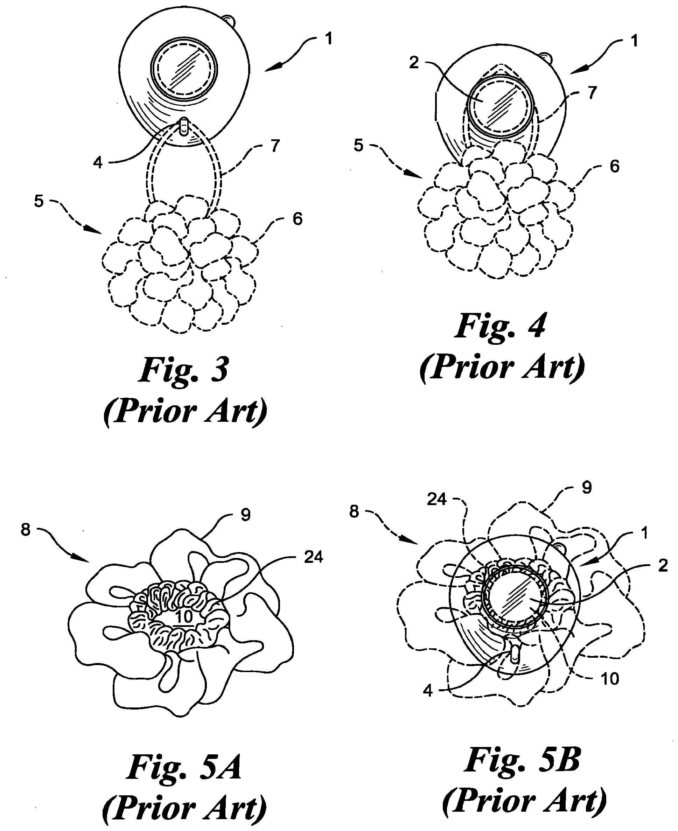

FIG. 3 is a front elevation view of the cleansing implement hanger in FIG. 1 whereby a sponge is suspended from the hanger via a cord contacting the retention lip;
FIG. 4 is a front elevation view of the cleansing implement hanger in FIG. 1 whereby a sponge is suspended from the holder via a cord contacting the knob;
FIG. 5a is a front elevation view of a donut-shaped sponge as described by Osborne in United States Patent Nos. D499,635 and 7,140,063;
FIG. 5b is a front elevation view of the cleansing implement hanger in FIG. 1
whereby the donut-shaped sponge in FIG. 5a is secured to the hanger via contact with the knob;

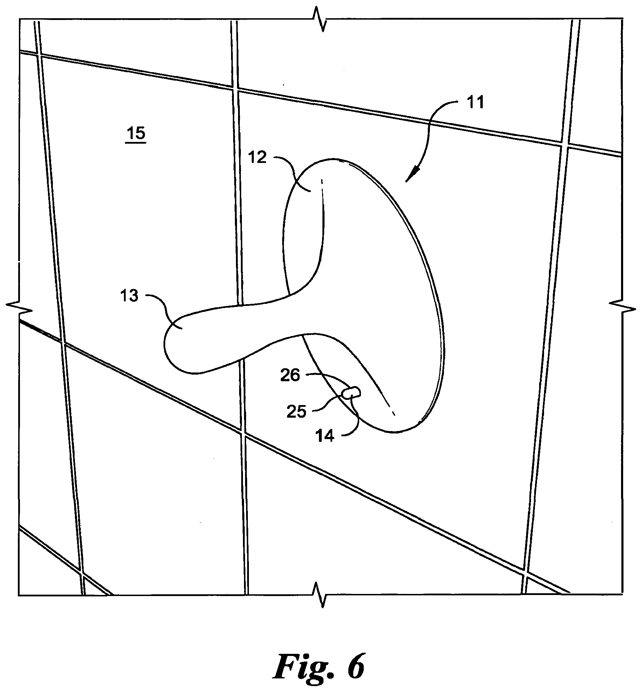

FIG. 6 is a perspective view of the new invention illustrating a suction-enabled sponge holder including a protrusion and a spike disposed along a suction cup attachable to a surface in accordance with an embodiment of the invention;

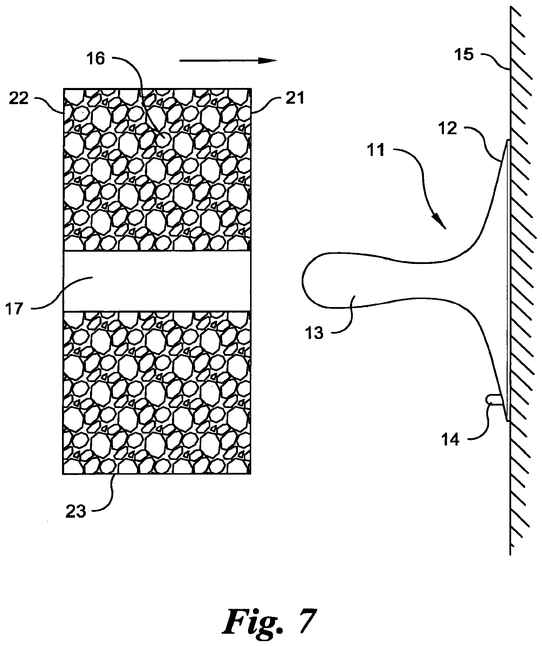

FIG. 7 is an enlarged, partial cross-sectional view illustrating the suction enabled sponge holder disposed along a mounting surface and a sponge with a permanent cavity prior to attachment of the sponge to the holder in accordance with an embodiment of the invention;

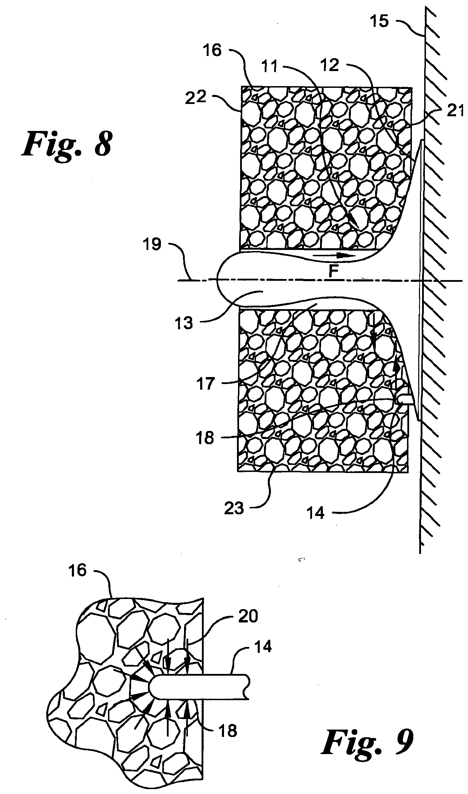

FIG. 8 is an enlarged, partial cross-sectional view illustrating the suction enabled sponge holder and the sponge in FIG. 7 after attachment whereby the protrusion along the sponge holder engages the permanent cavity along the sponge and the spike also along the sponge holder penetrates the sponge forming a temporary cavity therein in accordance with an embodiment of the invention;
FIG. 9 is an enlarged, partial cross-sectional view illustrating compressive forces applied by the sponge onto the spike within the temporary cavity in accordance with an embodiment of the invention; and

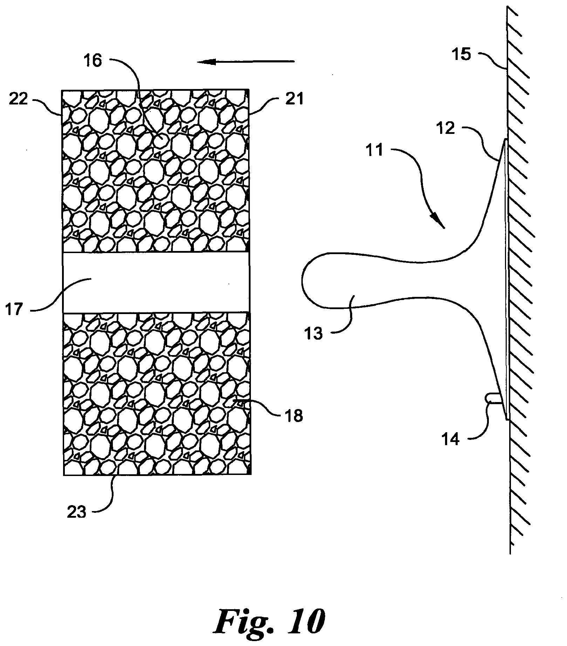

FIG. 10 is an enlarged, partial cross-sectional view illustrating the suction enabled sponge holder and the sponge in FIG. 8 after separation whereby the sponge adjacent to the temporary cavity recovers its' original shape, either in part or whole, thereby closing the temporary cavity in accordance with an embodiment of the invention.

### 5. Modes for Carrying Out the Invention

Reference will now be made in detail to several embodiments of the invention that are illustrated in the accompanying drawings. Wherever possible, same or similar reference numerals are used in the drawings and the description to refer to the same or like parts. The drawings are in simplified form and are not to precise scale.

While features of various embodiments are separately described herein, it is understood that such features may be combinable to form other additional embodiments.

Components described herein are manufactured via methods, processes, and techniques understood in the art, including, but not limited to, machining, molding, forming, and three-dimensional printing. Components may be composed of any suitable material including, but not limited to, moldable plastics.

Referring now to FIG. 6, the sponge holder 11 in its simplest form includes a suction cup 12, a protrusion 13, and a spike 14. The protrusion 13 and the spike 14 extends outward from the suction cup 12 and away from a mounting surface 15 onto which the sponge holder 11 is removably securable. Suction cup 12, protrusion 13, and spike 14 may be fabricated as a single-piece unit or as separate components. In the latter, components are assembled to form the sponge holder 11 via mechanical, adhesive, or other suitable means understood in the art.

Referring again to FIG. 6, the suction cup 12 is a flexible, generally cup shaped element capable of forming a lower pressure region between the suction cup 12 and a mounting surface 15. The perimeter about the suction cup 12 may sealingly engage the mounting surface 15 to form a sealed region that traps air between the suction cup 12 and the mounting surface 15. The suction cup 12 is preferred to be defonnable so that the center portion of the suction cup 12 may be deformed inward toward the mounting surface 15 when a force is applied thereby expelling the air trapped therebetween, preferably across the sealing engage. The suction cup 12 is also preferred to be resilient. A lower pressure is formed between the suction cup 12 and the mounting surface 15 as the suction cup 12 attempts to recover its original shape. The lower pressure between the suction cup 12 and the mounting surface 15 allows the higher pressure air external to the sealed region to push the suction cup 12 against the mounting surface 15 thereby pushing the suction cup 12 into and securing the suction cup 12 to the mounting surface 15. The pressure differential between the air trapped within and the air surrounding the suction cup 12 should be at least sufficient to support the weight of the sponge holder 11 and a sponge 16 (not shown) when wet. The suction cup 12 is removed from the mounting surface 15 by separating a portion of the perimeter of the suction cup 12 from the mounting surface 15 thereby compromising the sealing engagement so that the air pressure between the suction cup 12 and the mounting surface 15 equalizes to atmospheric conditions adjacent to the sponge holder 11. It is understood that other suction means may be suitable and applicable to the invention.

Referring again to FIG. 6, the protrusion 13 is an elongate element attached at one end to the suction cup 12 in a cantilevered arrangement. The attachment between protrusion 13 and suction cup 12 and the rigidness of the protrusion 13 should prevent or at least minimize deflection of the protrusion 13 with respect to the suction cup 12.

In preferred embodiments, the protrusion 13 is disposed at or near the center of the suction cup 12. The width profile of the protrusion 13 is design dependent. In some embodiments, the protrusion 13 may include a width profile that is tapered. For example, the protrusion 13 may have a tear-drop shaped profile as illustrated in FIG. 6. In other embodiments, the protrusion may include a uniform width profile. The length of the protrusion 13 is likewise design dependent. For example, length of the protrusion 13 may be less than, equal to, or greater than the thickness of a sponge 16.

Referring again to FIG. 6, the spike 14 is an elongated element attached at one end to the suction cup 12 in a cantilevered arrangement. The spike 14 is located adjacent to the protrusion 13. The distance between the spike 14 and protrusion 13 is design dependent. In preferred embodiments, the distance is maximized so as to likewise maximize resistance to rotation of a sponge 16 (not shown) about the protrusion 13.

Referring again to FIG. 6, the spike 14 is a nail-like element with a body 26, preferably slender, and a pointed end 25 opposite of the suction cup 12. The pointed end 25 should allow the spike 14 to penetrate and thereafter enter a sponge 16. The length and width of the spike 14 are design dependent based on factors including, but not limited to, the composition, dimensions, and purpose of the sponge 16. In preferred embodiments, the length and width of the spike 14 may be less than the corresponding dimensions of the protrusion 13. It is generally preferred that the protrusion 13 and the spike 14 extend from the suction cup 12 in a substantially parallel arrangement.

Referring now to FIG. 7, the sponge holder 11 is shown secured to the mounting surface 15 via the suction cup 12 prior to attachment of the sponge 16. The protrusion 13 and the spike 14 perpendicularly extend from the suction cup 12. The sponge 16 is positioned adjacent to the sponge holder 11 so that a permanent cavity 17 along the sponge 16 aligns with the protrusion 13. The permanent cavity 17 is a preformed hole that extends at least partially through the sponge 16 from a front surface 21 toward a back surface 22. For purpose of the present application, the term preformed hole is understood to mean a hole disposed along the sponge 16 prior to mounting onto the sponge holder 11. The hole may be formed during manufacture of the sponge 16. The length and diameter of the permanent cavity 17 should be sufficient to allow slidable engagement between at least a portion of the outer surface along the protrusion 13 and at least a portion of the inner surface defining the permanent cavity 17. The sponge 16 is seated onto the sponge holder 11 by pushing, that is moving, the sponge 16 in the direction of the sponge holder 11. The moving force may be applied to the back surface 22 and/or the side surface 23 by a user's hand or other suitable means.

Referring now to FIG. 8, the sponge holder 11 is shown secured to the mounting surface 15 via the suction cup 12 after slidably coupling the sponge 16 to the sponge holder 11. The front surface 21 of the sponge 16 may contact the suction cup 12 when seated onto the sponge holder 11 without or with deformation to the front surface 21 at contact between the sponge 16 and the sponge holder 11, the latter illustrated in FIG. 8. The pushing or seating force is removed after proper placement of the sponge 16 onto sponge holder 11.

Referring again to FIG. 8, the protrusion 13 is seated within the permanent cavity 17 so that the protrusion 13 contacts the sponge 16 along the permanent cavity 17. In some embodiments, the protrusion 13 may compress at least a portion of the material along the permanent cavity 17. The resiliency, that is the recovery behavior, of the sponge 16 in response to compression may communicate a force (F) onto the sponge 16, when the sponge 16 interacts with the tapered surface along the protrusion 13 oriented toward the mounting surface 15, that urges or pushes the sponge 16 toward the sponge holder 11 after the seating force is removed.

Referring again to FIG. 8, at least a portion of the spike 14 has penetrated and now extends into a temporary cavity 18 beginning from the front surface 21 in the direction of the back surface 22. The depthwise arrangement of the temporary cavity 18 may be generally aligned with the side surface 23 when the latter is perpendicular to the front surface 21 and parallel to the spike 14.

Referring again to FIG. 8, the temporary cavity 18 is characterized by localized damage to material(s) comprising the sponge 16 resulting from penetration by the spike 14. The damage may include elastic deformation, inelastic deformation, tearing, and/or failure of material as the spike 14 directly interacts with the sponge 16 along and/or indirectly interacts with the sponge 16 about the penetration path. During and after penetration, the spike 14 contacts the sponge 16 along the temporary cavity 18.

Referring again to FIG. 8, physical interactions between the protrusion 13 and the sponge 16 along the permanent cavity 17 and between the spike 14 and the sponge 16 along the temporary cavity 18 cooperate to secure the sponge 16 to the sponge holder 11. This functionality prevents the sponge 16 from rotating about the major axis 19 along the protrusion 13 in a plane corresponding to the mounting surface 15. It is also possible that engagements between the sponge 16 and both protrusion 13 and spike 14 cooperate to limit rotation in one or more planes perpendicular to the mounting surface 15. This functionality may prevent or at least minimize rocking motion that might otherwise unseat the sponge 16 from the protrusion 13 and spike 14. It is also possible for the sponge 16 to shrink as fluid evaporates therefrom, thereby imparting tension along the sponge 16 between the protrusion 13 and the spike 14. While shrinkage along the sponge 16 is generally represented by the opposed arrows in FIG. 8, it is understand that shrinkage may occur along other two dimensional planes or in three dimensions dependent on the properties of the material(s) and construction of the sponge 16. This functionality by the invention may pull the sponge 16 laterally into tighter contact with the side of each of the protrusion
13 and the spike 14, thus improving resistance to inadvertent separation of the sponge 16 from the sponge holder 11 and to inadvertent rotation by the sponge 16 with respect to the sponge holder 11.

Referring now to FIG. 9, a compressive force 20 may be applied onto the spike 14 via the sponge 16 along the temporary cavity 18. The compressive force 20 is due at least in part to the elastic behavior of material comprising the sponge 16 whereby some or all material displaced from the temporary cavity 18 attempts to return to its original position thereby pushing into and onto the surface of the spike 14. The compressive force 20 may allow the sponge 16 to grip and hold the spike 14 thereby resisting forces which otherwise compromise holding function of the sponge holder 11.

Referring now to FIG. 10, the sponge holder 11 secured to the mounting surface 15 via the suction cup 12 is shown after detachment of the sponge 16. The removing force may be applied to the front surface 21 and/or the side surface 23 by a user's hand or other suitable means that allow the sponge 16 to be pulled away from the sponge holder 11 and mounting surface 15. During removal, the protrusion 13 slidingly engages the sponge 16 about the permanent cavity 17 and the spike 14 slidingly engages the temporary cavity 18 until the sponge 16 is completely physically separated from both the protrusion 13 and the spike 14. The removal force applied to the sponge 16 must be greater than the compressive force 20 along the spike 14 and other seating forces along the protrusion 13. The permanent cavity 17 may recover its original shape if any compression or misalignment is imparted into the material by the protrusion 13. The temporary cavity 18 may at least partially close as material about the temporary cavity 18 recovers its original shape, as generally represented by the line in FIG. 10. The degree of closure and visibility of the location of the temporary cavity 18 may be dependent in part on the depth of the temporary cavity 18, the resiliency, compressibility and recovery properties of the sponge 16, and the extent and type of localized damage caused by the spike 14. The temporary cavity 18 may be re-penetrated in part or whole when the sponge 16 is reseated onto the sponge holder 11.

Referring now to FIGS. 7-10, the sponge 16 is secured to the sponge holder 11 by pushing the sponge 16 in the direction of the sponge holder 11 so that the sponge 16 engages the protrusion 13 along the permanent cavity 17 at the front surface 21 of the sponge 16. The spike 14 penetrates the sponge 16 from the front surface 21 toward the back surface 22 as the sponge 16 slides onto the protrusion 13. The spike 14
displaces material within the sponge 16 thereby locally damaging the material to form the temporary cavity 18 along the sponge 16. The penetration depth into the sponge 16 is dependent in part on the length of the spike 14, the relative position of front and back ends of both protrusion 13 and spike 14 with respect to the upper surface of the suction cup 12, and positioning of the sponge 16 along the protrusion 13 and the spike 14. The temporary cavity 18 conforms to the shape of the spike 14 residing within the sponge 16.

Contact between the protrusion 13 and the sponge 16 within the permanent cavity 17 and contact between the spike 14 and the sponge 16 along the temporary cavity 18 cooperate to limit movement and/or rotation of the sponge 16 with respect to the sponge holder 11 thereby preventing separation of the sponge 16 from the sponge holder 11 when the sponge 16 is properly mounted to the sponge holder 11. In some embodiments, localized compression of the sponge 16 by and about the spike 14 may be sufficient to communicate a localized compressive force 20 onto the outer surface of the portion of the spike 14 residing within the temporary cavity 18. It is
also possible in some embodiments for the sponge 16 to shrink as fluids evaporate therefrom allowing the sponge 16 to laterally contract and thereby pull the sponge 16 into tighter contact with each of the protrusion 13 and the spike 14.

The permanent cavity 17 separates from the protrusion 13 and the temporary cavity 18 separates from the spike 14 as the sponge 16 is pulled away from the sponge holder 11 and mounting surface 15. The compressive properties of the sponge 11 may cause at least some of the material comprising the sponge 16 to return to its original location and/or shape thereby closing the temporary cavity 18. If the sponge 16 is composed of quicker-recovery material, then the temporary cavity 18 may collapse as the spike 14 slides out from the sponge 16. If the sponge 16 is composed of slower recovery material, then the temporary cavity 18 may collapse after the spike 14 slides out and separates from the sponge 16.

The description above indicates that a great degree of flexibility is offered in terms of the present invention. Although various embodiments have been described in considerable detail with reference to certain preferred versions thereof, other versions are possible. Therefore, the scope of the appended claims should not be limited to the description of the preferred versions contained herein.

### 6. Industrial Applicability

As is evident from the explanation herein, the described invention is a sponge holder applicable, by way of non-limiting examples only, to the temporary storage of a sponge between uses adjacent to a sink or a bathtub. The sponge holder is likewise applicable to other cleaning devices that are penetrable by a spike-like element and resealable or recoverable thereafter whereby the area penetrated is nearly or completely invisible.

## Claims

1. A suction-enabled sponge holder (11) comprising:
(a) a sponge (16) having a body portion, a front surface (21) including a permanent cavity (17) extending into the body portion from the front surface
(b) a suction cup (12);
(c) a protrusion (13) that extends from said suction cup; and
(d) a spike (14) that extends from said suction cup adjacent to said protrusion; wherein:
said protrusion (13) slidably engages a permanent cavity (17) extending into the sponge (16) from the front surface (21) when said sponge is either pushed onto or pulled away from said suction-enabled sponge holder; said spike (14) penetrates said sponge at said front surface to form a temporary cavity (18) adjacent to said permanent cavity (17) when said sponge is pushed onto said suction-enabled sponge holder; said temporary cavity closes when said sponge is pulled away from said suction-enabled sponge holder.

2. The suction-enabled sponge holder of claim 1, wherein said protrusion (13) and said spike (14) cooperate to prevent separation of said sponge (16) from said suction-enabled sponge holder (11).

3. The suction-enabled sponge holder of claim 1, wherein said protrusion and said spike cooperate to prevent rotation of said sponge about said protrusion.

4. The suction-enabled sponge holder of claim 1, wherein said protrusion extends into at least a portion of said permanent cavity.

5. The suction-enabled sponge holder of claim 1, wherein said suction cup is attachable to and removable from a mounting surface.

6. The suction-enabled sponge holder of claim 1, wherein at least a portion of said spike penetrates said sponge.

7. The suction-enabled sponge holder of claim 1, wherein said temporary cavity is **characterized by** localized damage to said sponge caused by said spike.

8. A method for securing a sponge (16) to a suction-enabled sponge holder (11) comprising the steps of:
(a) pushing said sponge onto said suction-enabled sponge holder so that a permanent cavity (17) beginning at a front surface (21) of said sponge engages a protrusion (13) extending from said suction-enabled sponge holder;
(b) penetrating a front surface of said sponge via a spike (14) extending from said suction-enabled sponge holder adjacent to said protrusion, said penetration forms a temporary cavity (18) along said sponge, said temporary cavity is **characterized by** localized damage to said sponge caused by said spike, said temporary cavity conforms to the shape of said spike residing within said sponge; and
(c) preventing separation between said sponge and said suction-enabled sponge holder via interaction between said protrusion and said sponge along said permanent cavity and interaction between said spike and said sponge along said temporary cavity.

9. The method of claim 8, further comprising the step of:
(d) applying a localized compressive force via said sponge onto said spike disposed along said temporary cavity.

10. The method of claim 9, further comprising the step of:
(e) pulling said sponge away from said suction-enabled sponge holder so that said permanent cavity separates from said protrusion and said temporary cavity separates from said spike.

11. The method of claim 10, further comprising the step of:
(f) closing at least a portion of said temporary cavity via said localized compressive force as said sponge is pulled away from said suction-enabled sponge holder.

12. The method of claim 10, further comprising the step of:
(g) closing at least a portion of said temporary cavity via said localized compressive force after said sponge is pulled away from said suction-enabled sponge holder.

13. The method of claim 8, further comprising the step of:
(h) avoiding relative rotation between said sponge and said suction-enabled sponge holder via said interactions.

14. The method of claim 13, wherein said interactions cooperate to secure said sponge to said sponge holder.

15. The method of claim 14, wherein said interactions are due at least in part to shrinkage of said sponge whereby said sponge is laterally pulled into tighter contact with each of said protrusion and said spike.

## Patentansprüche

1. Ein saugbasierter Schwammhalter (11), umfassend:
(a) Einen Schwamm (16) mit einem Gehäuseabschnitt, eine Frontfläche (21), die eine permanente Vertiefung (17) beinhaltet, die sich von der Frontfläche in den Gehäuseabschnitt erstreckt
(b) einen Saugnapf (12);
(c) einen Vorsprung (13), der sich aus dem Saugnapf erstreckt; und
(d) einen Zacken (14), der sich aus dem Saugnapf neben dem Vorsprung erstreckt; wobei gilt:
Dieser Vorsprung (13) verbindet verschiebbar eine permanente Vertiefung (17), die sich in den Schwamm (16) von der Frontfläche (21) erstreckt, wenn dieser Schwamm entweder auf diesen saugbasierten Schwammhalter gedrückt wird oder von diesem weggezogen wird; der Zacken (14) durchdringt den Schwamm an der Frontfläche, um eine vorübergehende Vertiefung (18) neben der permanenten Vertiefung (17) zu bilden, wenn der Schwamm auf den saugbasierten Schwammhalter gedrückt wird; diese vorübergehende Vertiefung schließt sich, wenn der Schwamm von dem saugbasierten Schwammhalter weggezogen wird.

2. Der saugbasierte Schwammhalter nach Anspruch 1, wobei der Vorsprung (13) und der Zacken (14) zusammenarbeiten, um eine Trennung des Schwamms (16) von dem saugbasierten Schwammhalter (11) zu verhindern.

3. Der saugbasierte Schwammhalter nach Anspruch 1, wobei der Vorsprung und der Zacken zusammenarbeiten, um eine Drehung des Schwamms um den Vorsprung zu verhindern.

4. Der saugbasierte Schwammhalter nach Anspruch 1, wobei sich der Vorsprung in mindestens einen Abschnitt der permanenten Vertiefung erstreckt.

5. Der saugbasierte Schwammhalter nach Anspruch 1, wobei der Saugnapf an einer Montagefläche angebracht und wieder entfernt werden kann.

6. Der saugbasierte Schwammhalter nach Anspruch 1, wobei mindestens ein Abschnitt des Zackens in den Schwamm eindringt.

7. Der saugbasierte Schwammhalter nach Anspruch 1, wobei die vorübergehende Vertiefung durch einen lokal begrenzten Schaden an dem Schwamm, verursacht durch den Zacken, gekennzeichnet ist.

8. Ein Verfahren zur Befestigung eines Schwamms (16) an einem saugbasierten Schwammhalter (11), die folgenden Schritte umfassend:
(a) Drücken des Schwamms auf den saugbasierten Schwammhalter, so dass eine permanente Vertiefung (17), die an einer Frontfläche (21) des Schwamms beginnt, sich mit einem Vorsprung (13) verbindet, der sich von dem saugbasierten Schwammhalter erstreckt;
(b) Durchdringen einer Frontfläche des Schwamms über einen Zacken (14), der sich von dem saugbasierten Schwammhalter neben dem Vorsprung erstreckt, dieses Durchdringen bildet eine vorübergehende Vertiefung (18) entlang dem Schwamm, diese vorübergehende Vertiefung ist durch einen lokal begrenzten Schaden an dem Schwamm, verursacht durch den Zacken, gekennzeichnet, diese vorübergehende Vertiefung entspricht der Form des Zackens, der sich in dem Schwamm befindet; und
(c) Verhindern einer Trennung zwischen dem Schwamm und dem saugbasierten Schwammhalter über eine Interaktion zwischen dem Vorsprung und dem Schwamm entlang der permanenten Vertiefung und Interaktion zwischen dem Zacken und dem Schwamm entlang der vorübergehenden Vertiefung.

9. Das Verfahren nach Anspruch 8, ferner umfassend den folgenden Schritt:
(d) Anwenden einer lokalen Druckkraft über den Schwamm auf den Zacken, der sich in die vorübergehende Vertiefung erstreckt.

10. Das Verfahren nach Anspruch 9, ferner umfassend den folgenden Schritt:
(e) Abziehen des Schwamms von dem saugbasierten Schwammhalter, so dass sich die permanente Vertiefung von dem Vorsprung und sich die vorübergehende Vertiefung von dem Zacken trennt.

11. Das Verfahren nach Anspruch 10, ferner umfassend den folgenden Schritt:
(f) Schließen mindestens eines Abschnitts der vorübergehenden Vertiefung über die lokal begrenzte Druckkraft, wenn der Schwamm von dem saugbasierten Schwammhalter abgezogen wird.

12. Das Verfahren nach Anspruch 10, ferner umfassend den folgenden Schritt:
(g) Schließen mindestens eines Abschnitts der vorübergehenden Vertiefung über die lokal begrenzte Druckkraft, wenn der Schwamm von dem saugbasierten Schwammhalter abgezogen wird.

13. Das Verfahren nach Anspruch 8, ferner umfassend den folgenden Schritt:
(h) Verhindern einer relativen Drehung zwischen dem Schwamm und dem saugbasierten Schwammhalter über die Interaktionen.

14. Das Verfahren nach Anspruch 13, wobei die Interaktionen zusammenarbeiten, um den Schwamm an dem Schwammhalter zu befestigen.

15. Das Verfahren nach Anspruch 14, wobei diese Interaktionen mindestens teilweise durch eine Schrumpfung des Schwamms bedingt sind, wobei der Schwamm seitlich in engeren Kontakt mit dem Vorsprung und dem Zacken gezogen wird.

## Revendications

1. Support d'éponge à ventouse (11) comprenant :
(a) une éponge (16) présentant une partie corps, une surface avant (21) comportant une cavité permanente (17) s'étendant dans la partie corps depuis la surface avant
(b) une ventouse (12) ;
(c) une protubérance (13) qui s'étend depuis ladite ventouse ; et
(d) une pointe (14) qui s'étend depuis ladite ventouse adjacente à ladite protubérance dans lequel :
ladite protubérance (13) entre en prise de manière coulissante avec une cavité permanente (17) s'étendant dans l'éponge (16) depuis la surface avant (21) lorsque ladite éponge est soit poussée sur ledit support d'éponge à ventouse, soit tirée partant de celui-ci ; ladite pointe (14) pénètre dans ladite éponge au niveau de ladite surface avant pour former une cavité temporaire (18) adjacente à ladite cavité permanente (17) lorsque ladite éponge est poussée sur ledit support d'éponge à ventouse ; ladite cavité temporaire se ferme lorsque ladite éponge est tirée partant dudit support d'éponge à ventouse.

2. Support d'éponge à ventouse selon la revendication 1, dans lequel ladite protubérance (13) et ladite pointe (14) coopèrent pour empêcher la séparation de ladite éponge (16) dudit support d'éponge à ventouse (11).

3. Support d'éponge à ventouse selon la revendication 1, dans lequel ladite protubérance et ladite pointe coopèrent pour empêcher la rotation de ladite éponge autour de ladite protubérance.

4. Support d'éponge à ventouse selon la revendication 1, dans lequel ladite protubérance s'étend dans au moins une partie de ladite cavité permanente.

5. Support d'éponge à ventouse selon la revendication 1, dans lequel ladite ventouse peut être fixée à une surface de montage et en être tirée.

6. Support d'éponge à ventouse selon la revendication 1, dans lequel au moins une partie de ladite pointe pénètre dans ladite éponge.

7. Support d'éponge à ventouse selon la revendication 1, dans lequel ladite cavité temporaire est **caractérisée par** un dommage localisé à ladite éponge causé par ladite pointe.

8. Procédé destiné à fixer une éponge (16) à un support d'éponge à ventouse (11), comprenant les étapes consistant à :
(a) pousser ladite éponge sur ledit support d'éponge à ventouse de manière à ce qu'une cavité permanente (17) commençant au niveau d'une surface avant (21) de ladite éponge entre en prise avec une protubérance (13) s'étendant depuis ledit support d'éponge à ventouse ;
(b) pénétrer une surface avant de ladite éponge par l'intermédiaire d'une pointe (14) s'étendant depuis ledit support d'éponge à ventouse, adjacente à ladite protubérance, ladite pénétration forme une cavité temporaire (18) le long de ladite éponge, ladite cavité temporaire est **caractérisée par** un dommage localisé à ladite éponge causé par ladite pointe, ladite cavité temporaire se conforme à la forme de ladite pointe résidant à l'intérieur de ladite éponge ; et
(c) empêcher la séparation entre ladite éponge et ledit support d'éponge à ventouse par l'intermédiaire de l'interaction entre ladite protubérance et ladite éponge le long de ladite cavité permanente et l'interaction entre ladite pointe et ladite éponge le long de ladite cavité temporaire.

9. Procédé selon la revendication 8 comprenant en outre les étapes consistant à :
(d) appliquer une force de compression localisée par l'intermédiaire de ladite éponge sur ladite pointe disposée le long de ladite cavité temporaire.

10. Procédé selon la revendication 9 comprenant en outre les étapes consistant à :
(e) tirer ladite éponge partant dudit support d'éponge à ventouse de manière à ce que ladite cavité permanente se sépare de ladite protubérance et que ladite cavité temporaire se sépare de ladite pointe.

11. Procédé selon la revendication 10 comprenant en outre les étapes consistant à :
(f) fermer au moins une partie de ladite cavité temporaire par l'intermédiaire de ladite force de compression localisée lorsque ladite éponge est tirée partant dudit support d'éponge à ventouse.

12. Procédé selon la revendication 10 comprenant en outre les étapes consistant à :
(g) fermer au moins une partie de ladite cavité temporaire par l'intermédiaire de ladite force de compression localisée après que ladite éponge a été tirée partant dudit support d'éponge à ventouse.

13. Procédé selon la revendication 8 comprenant en outre les étapes consistant à :
(h) éviter la rotation relative entre ladite éponge et ledit support d'éponge à ventouse par l'intermédiaire desdites interactions.

14. Procédé selon la revendication 13, dans lequel lesdites interactions coopèrent pour sécuriser ladite éponge sur ledit support d'éponge.

15. Procédé selon la revendication 14, dans lequel lesdites interactions sont dues au moins en partie au rétrécissement de ladite éponge, de ce fait ladite éponge est tirée latéralement en contact plus étroit avec chacune parmi ladite protubérance et ladite pointe.
